# EUROPEAN PATENT APPLICATION

(11) **EP 1 592 170 A2**
(43) Date of publication of application: **02.11.2005**
(21) Application number: 05300304.2
(22) Date of filing: 21.04.2005
(51) Int. Cl.: H04L 12/24

(54) **Bookmarks used for map navigation**

(30) Priority: 22.04.2004 US 829252
(71) Applicant: ALCATEL, 75008 Paris (FR)
(72) Inventor: KIESEKAMP, David, Ottawa, Ontario K2A 2B4 (CA); MARTINEAU, Terrence, Ottawa, Ontario K1N 8N9 (CA); CANTON, Raymond, Ottawa, Ontario K1L 8L9 (CA); MORIN, Keith, Kanata, Ontario K2K 2H4 (CA)
(74) Representative: Hervouet, Sylvie

(57) **Abstract**

Apparatus and method are provided for managing bookmarks of hierarchical network objects within a network management tool or other application for managing or viewing network objects within a network object hierarchy. An operator can bookmark network objects while investigating a network, and can quickly return to a view of a bookmarked network object by selecting the appropriate bookmark. The invention allows an operator to concentrate on managing the network objects rather than spending unnecessary time navigating through the hierarchy to reach or even locate particular network objects.

## Description

### Field of the invention

The invention relates to network management systems within telecommunication networks, and more particularly to graphical user interfaces of such systems.

### Background of the invention

In network management tools used in management of hierarchical telecommunication networks, operators work within a network management map display to drill down into layers of network maps to work with or identify network objects. Network object hierarchies can contain tens of thousands of network objects, such as network elements, groups of network elements, line cards, and ports. Each time that an operator wishes to view information on a particular network object, the operator must navigate back and forth through several layers of the map to reach the view of the network object, which is time consuming. This becomes burdensome as the size of the network hierarchy being managed grows.

An operator can leave a window displaying a desired network object open, and possibly minimized, while investigating a different network object. This allows the operator to return to a particular network object frequently by merely returning to the window containing the view of the network object. However, this can result in so many open windows or minimized icons being displayed simultaneously that the operator may have difficulty locating the window appropriate to the desired network object. Additionally, leaving windows open is only useful for as long as the current session is active, since all windows are closed when the operator ends the network management session, that is, logs out.

An interface which allowed operators to easily locate a desired or frequently visited network object within the network would improve the efficiency of hierarchical network management operations.

### Summary of the invention

In accordance with one aspect of the invention, a method is provided for providing access to views of network objects within an application for use in managing or viewing a communication network having a hierarchy of network objects, the application providing a graphical user interface through which an operator can issue instructions. A stored bookmark list of bookmarks is stored, each bookmark being associated with a network object. The bookmark list is displayed in the graphical user interface. If the operator selects a bookmark in the stored bookmark list, information concerning the network object associated with the bookmark selected by the operator is displayed. If the operator issues instructions to add a new bookmark to the stored bookmark list, a new bookmark is added to the stored bookmark list, the new bookmark being associated with a currently displayed network. The stored bookmark list is preferably stored uniquely in association with the operator.

The methods may be carried out as part of a network management tool. The methods may be stored as instructions on a computer-readable medium, to be executed by a computer processor.

The method and the network management tool of the present invention allow an operator of a network management tool to quickly return to particular network objects within the network hierarchy by bookmarking network objects. This allows the operator to concentrate on managing the network objects rather than spending time navigating up and down the network object hierarchy.

### Brief description of the drawings

The features and advantages of the invention will become more apparent from the following detailed description of the preferred embodiment(s) with reference to the attached figures, wherein:
FIG. 1 is a diagram of an example menu of bookmarks according to one embodiment of the invention; and
FIG. 2 is a diagram of an example bookmark management window according to one embodiment of the invention.

It will be noted that in the attached figures, like features bear similar labels.

### Detailed description of the embodiments

A network management tool displays a graphical user interface on a computer display device, and allows an operator to interact with a network management system. The network management tool includes instructions in the form of software for displaying the graphical user interface. The software may be stored on a computer-readable medium. The network management tool displays a window having an information region, a menu bar, and a toolbar. Information concerning a currently displayed network object is displayed in the information region. The toolbar includes a plurality of toolbar buttons, including a bookmark toolbar button. The menu bar includes a plurality of drop down menus, one of which is labeled as a View menu.

When the operator selects the bookmark toolbar button, the network management tool displays a bookmark menu, preferably as a drop down menu. The View menu includes a Bookmarks submenu. When the operator selects the Bookmarks submenu from within the View menu of the menu bar, the network management tool displays the bookmark menu, preferably as a drop down menu. The operator can therefore access the bookmark menu either by selecting the bookmark toolbar button from the toolbar, or by selecting the Bookmarks submenu within the View menu of the menu bar.

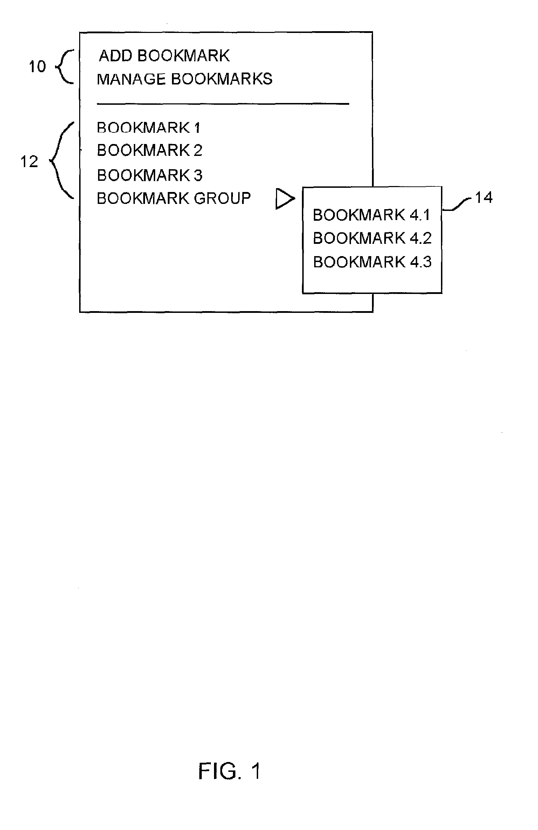

Referring to FIG. 1, an example bookmark menu according to one embodiment of the invention is shown. The bookmark menu includes a command list 10 of at least two commands, one of which is an Add Bookmark command and one of which is a Manage Bookmarks command. The command list 10 is the same for all operators. The bookmark menu also includes a bookmark list 12 of bookmark entries, though the bookmark list 12 may be empty. The bookmark entries may be bookmarks (Bookmark 1, Bookmark 2, and Bookmark 3 in the example shown in FIG. 1) or bookmark groups (Bookmark Group in the example shown in FIG. 1). Each bookmark group has its own associated bookmark list 14 of bookmark entries, which may contain bookmarks and may contain bookmark groups. The bookmark list 14 associated with a bookmark group is displayed when an operator selects the bookmark group from the bookmark list 12.

Each bookmark includes a name and an association with a network object within the network hierarchy. The name of the bookmark is displayed within the bookmark list 12. The association with a network object may simply be a network object identifier. Each bookmark may also include a network object type or other information associated with the network object. Each bookmark therefore includes at least a name and an associated network object.

The bookmark list 12 is particular to an operator and is stored as a stored bookmark list so as to be retrievable by the network management tool, either as a data file or in computer memory. When an operator logs on to the network management system, the network management tool retrieves the stored bookmark list associated with the operator.

When the operator selects the Add Bookmark command from the command list 10, the network management tool adds a new bookmark to the bookmark list 12 and to the stored bookmark list. The new bookmark includes an association with the network object about which information is currently being displayed in the information region, and initially has a name indicating the currently displayed network object.

When the operator selects a bookmark from the bookmark list 12, the network management tool determines the network object associated with the bookmark, and displays information concerning the associated network object within the information region of the window.

When the operator selects a bookmark group from the bookmark list 12, the network management tool displays the bookmark list associated with the bookmark group. The bookmark list associated with the bookmark group may contain bookmarks and may contain additional bookmark groups. If the operator selects a bookmark from within the associated bookmark list, the network management tool displays information concerning the associated network object, as described above. If the operator selects a bookmark group from within the associated bookmark list, the network management tool displays yet another associated bookmark list.

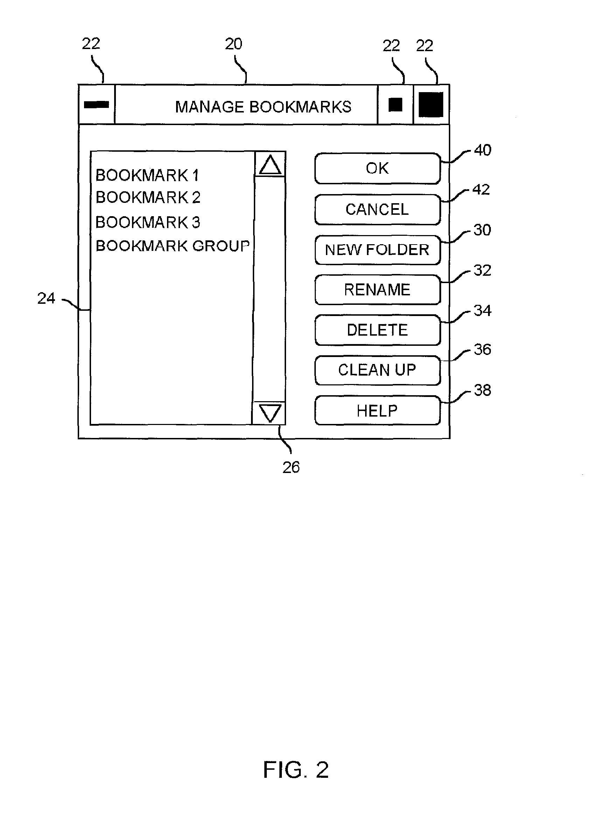

When the operator selects the Manage Bookmarks command from the command list 10, the network management tool displays a bookmark management window. Referring to FIG. 2, a bookmark management window according to one embodiment of the invention is shown, including an example list of bookmarks and bookmark groups. The bookmark management window includes a title bar 20 and one or more window control buttons 22. The bookmark management window includes a bookmark list 24 having bookmark entries. When the bookmark management window is opened, the bookmark entries within the bookmark list 24 are initially identical to the bookmark entries within the bookmark list 12 of the bookmark menu.

The bookmark management window includes a scroll bar 26 which allows an operator to scroll through the bookmark list 24 in the event that the bookmark list 24 includes more bookmark entries than can fit within the viewing area. The bookmark management window includes a New Folder button 30, a Rename button 32, a Delete button 34, a Clean Up button 36, a Help button 38, an OK button 40, and a Cancel button 42. Different embodiments of the invention may have different button layouts, and may have additional buttons or fewer buttons.

The operator can select a bookmark entry within the bookmark list 24, for example by clicking on a bookmark entry with a mouse. If the operator drags a bookmark entry and drops it on a bookmark group within the bookmark list 24, the network management tool reorganizes the bookmark list to place the selected bookmark entry within the associated bookmark list of the bookmark group onto which the bookmark entry was dropped. The network management tool does not yet update the stored bookmark list.

If the operator selects the New Folder button 30, the network management tool opens a dialog box and prompts the operator to enter a name. The network management tool then adds a new bookmark group to the bookmark list 24, the new bookmark group having the name entered by the operator.

If the operator selects the Rename button 32 and the operator has selected a bookmark entry, the network management tool opens a dialog box and prompts the operator to enter a name. The network management tool then changes the name associated with the selected bookmark entry within the bookmark list 24.

If the operator selects the Delete button 34 and the operator has selected a bookmark entry, the network management tool deletes the selected bookmark entry from the bookmark list 24. If the selected bookmark entry is a bookmark group, the network management tool also deletes any bookmark lists associated with the selected bookmark group.

If the operator selects the Clean Up button 36, the network management tool determines for each bookmark within the bookmark list 24 whether the associated network object is still valid. If the associated network object is no longer valid, for example due to removal of a network element, the bookmark is removed from the bookmark list 24.

If the operator selects the Help button 38, the network management tool opens a window offering interactive instructions regarding the bookmark management window.

If the operator selects the OK button 40, the network management tool closes the bookmark management window, updates the bookmark list 12 within the bookmark menu, and updates the stored bookmark list, thereby saving any changes made by the operator to the bookmark list while interacting with the bookmark management window. If the operator selects the Cancel button 42, the network management tool closes the bookmark management window without updating the bookmark list 12 within the bookmark menu and without updating the stored bookmark list, thereby canceling any changes made by the operator to the bookmark list while interacting with the bookmark management window.

The invention has been described with respect to use of bookmarks in a network management tool within a network management system. More generally, the invention can be used with any application by which an operator views or manages information concerning network objects within a network object hierarchy through a graphical user interface, such as a network topology map application. The bookmarks are presented through a dropdown menu in a menu bar of any such application.

The embodiments presented are exemplary only and persons skilled in the art would appreciate that variations to the embodiments described above may be made without departing from the spirit of the invention. The scope of the invention is solely defined by the appended claims.

## Claims

1. A method of providing access to views of network objects within an application for use in managing or viewing a communication network having a hierarchy of network objects, the application providing a graphical user interface through which an operator can issue instructions, the method comprising the steps of:
storing a stored bookmark list of bookmarks, each bookmark being associated with a network object;
displaying the bookmark list in the graphical user interface;
if the operator selects a bookmark in the stored bookmark list, displaying information concerning the network object associated with the bookmark selected by the operator; and
if the operator issues instructions to add a new bookmark to the stored bookmark list, adding a new bookmark to the stored bookmark list, the new bookmark being associated with a currently displayed network object.

2. The method of claim 1 wherein storing the stored bookmark list comprises storing the stored bookmark list uniquely in association with the operator.

3. The method of claim 1 wherein the step of displaying the bookmark list comprises displaying the bookmark list as part of a drop down menu, the drop down menu further including a menu command by which the operator can issue instructions to add a new bookmark to the stored bookmark list.

4. The method of claim 1 further comprising the steps of:
if the operator issues instructions to manage the bookmarks, providing a bookmark management window, the bookmark management window including a temporary bookmark list initially identical to the stored bookmark list;
if the operator issues instructions to create a bookmark group, creating a bookmark group;
if the operator issues instructions to assign one of the bookmarks in the temporary bookmark list, assigning the one of the bookmarks in the temporary bookmark list to the bookmark group; and
if the operator issues instructions to save the bookmark list, storing the temporary bookmark list as the stored bookmark list.

5. The method of claim 4 wherein the step of displaying the bookmark list comprises displaying the bookmark list as part of a drop down menu, the drop down menu further including a command by which the operator can issue instructions to manage the bookmarks.

6. The method of claim 5 wherein the step of providing a bookmark management window comprises displaying a New Folder button, a Rename button, a Delete button, an OK button, and a Cancel button, wherein the operator may designate any bookmark in the temporary bookmark list as a selected bookmark, and wherein the method comprises the further steps of:
if the operator selects the New Folder button, prompting the operator to enter a new bookmark group name, and creating a new bookmark group having the new bookmark group name in the temporary bookmark list;
if the operator selects the Rename button, prompting the operator to enter a new bookmark name, and renaming the selected bookmark with the new bookmark name;
if the operator selects the Delete button, deleting the selected bookmark from the temporary bookmark list; and
if the operator selects the Cancel button, closing the bookmark management window;
and wherein the operator issues the instructions to save the bookmark list by selecting the OK button.

7. The method of claim 6 wherein the step of providing a bookmark management window further comprises displaying a Clean Up button, and wherein the method comprises the further step of:
if the operator selects the Clean Up button, removing from the temporary bookmark list any bookmarks for which the associated network object no longer exists within the hierarchy of network objects.

8. The method of claim 6 wherein storing the stored bookmark list comprises storing the stored bookmark list uniquely in association with the operator.

9. A computer-readable medium having instructions for providing access to views of network objects within an application for viewing or managing a communication network having a hierarchy of network objects, the application providing a graphical user interface through which an operator can issue instructions, the computer-readable medium comprising:
instructions for storing a stored bookmark list of bookmarks, each bookmark being associated with a network object;
instructions for displaying the bookmark list in the graphical user interface;
instructions for displaying information concerning the network object associated with a bookmark selected by the operator, in the event that the operator selects a bookmark in the stored bookmark list; and
instructions for adding a new bookmark to the stored bookmark list, the new bookmark being associated with a currently displayed network object, in the event that the operator issues instructions to add a new bookmark to the stored bookmark list.

10. The computer-readable medium of claim 9 wherein the instructions for storing the stored bookmark list comprise instructions for storing the stored bookmark list uniquely in association with the operator.

11. The computer-readable medium of claim 9 wherein the instructions for displaying the bookmark list comprise instructions for displaying the bookmark list as part of a drop down menu, the drop down menu further including a menu command by which the operator can issue instructions to add a new bookmark to the stored bookmark list.

12. The computer-readable medium of claim 9 further comprising:
instructions for displaying a bookmark management window including a temporary bookmark list initially identical to the stored bookmark list, in the event that the operator issues instructions to manage the bookmarks;
instructions for creating a bookmark group, in the event that the operator issues instructions to create a bookmark group;
instructions for assigning one of the bookmarks in the temporary bookmark list to one of the bookmark groups, in the event that the operator issues instructions to assign one of the bookmarks in the temporary bookmark list; and
instructions for storing the temporary bookmark list as the stored bookmark list, in the event that the operator issues instructions to save the bookmark list.

13. The computer-readable medium of claim 12 wherein the instructions for displaying the bookmark list comprise instructions for displaying the bookmark list as part of a drop down menu, the drop down menu further including a command by which the operator can issue instructions to manage the bookmarks.

14. The computer-readable medium of claim 13 wherein the instructions for providing a bookmark management window comprise instructions for displaying a New Folder button, a Rename button, a Delete button, an OK button, and a Cancel button, and the computer-readable medium further comprising:
instructions for allowing the operator to designate any bookmark in the temporary bookmark list as a selected bookmark;
instructions for prompting the operator to enter a new bookmark group name and creating a new bookmark group having the new bookmark group name in the temporary bookmark list, in the event that the operator selects the New Folder button;
instructions for prompting the operator to enter a new bookmark name and renaming the selected bookmark with the new bookmark name, in the event that the operator selects the Rename button;
instructions for deleting the selected bookmark from the temporary bookmark list, in the event that the operator selects the Delete button; and
instructions for closing the bookmark management window, in the event that the operator selects the Cancel button;
and wherein the instructions for storing the temporary bookmark list as the stored bookmark list are executed in the even that the operator selects the OK button.

15. The computer-readable medium of claim 14 wherein the instructions for providing a bookmark management window further comprise instructions for displaying a Clean Up button, and the computer-readable medium further comprising:
instructions for removing from the temporary bookmark list any bookmarks for which the associated network object no longer exists within the hierarchy of network objects, in the event that the operator selects the Clean Up button.

16. The computer-readable medium of claim 14 wherein the instructions for storing the stored bookmark list comprise instructions for storing the stored bookmark list uniquely in association with the operator.
